# EUROPEAN PATENT SPECIFICATION

(11) **EP 2 245 534 B1**
(45) Date of publication and mention of the grant of the patent: **16.09.2015**
(21) Application number: 09712184.2
(22) Date of filing: 18.02.2009
(51) Int. Cl.: H04L 29/06, H04L 29/08

(54) **SYSTEM AND METHOD FOR RESOLVING EXTENSIONS FOR THE SIP SESSION POLICY FRAMEWORK**
SYSTEM UND VERFAHREN ZUM AUFLÖSEN VON ERWEITERUNGEN FÜR DEN SIP-SITZUNGSRICHTLINIENRAHMEN
SYSTÈME ET PROCÉDÉ SERVANT À RÉSOUDRE LES EXTENSIONS DU CADRE POLITIQUE DE SESSION SIP

(30) Priority: 18.02.2008 US 29523
(43) Date of publication of application: 03.11.2010
(73) Proprietor: BlackBerry Limited, Waterloo, ON N2K 0A7 (CA)
(72) Inventor: BAKKER, John-luc, Keller Texas 76248 (US); ALLEN, Andrew, Mundelein Illinois 60060 (US)
(74) Representative: Moore, Barry
(86) International application number: PCT/US2009/034411
(87) International publication number: WO 2009/105477

(56) References cited:
- US-A1- 2004 111 525
- US-B1- 6 970 869

## Description

### CROSS-REFERENCE TO RELATED APPLICATIONS

The present application claims priority to U.S. Provisional Patent Application No. 61/029,523, filed 02/18/2008, by Andrew Allen, et al, entitled "System and Method for Resolving Extensions for the SIP Session Policy Framework",

### BACKGROUND

The IP (Internet Protocol) Multimedia Subsystem (IMS) is a standardized architecture for providing multimedia services, including voice-over-IP calls, to both mobile and fixed user agents (UAs). The Session Initiation Protocol (SIP) been standardized and governed primarily by the Internet Engineering Task Force (IETF) as a signaling protocol for creating, modifying, and terminating IMS-based calls or sessions. As used herein, the terms "user agent" and "UA" might in some cases refer to mobile devices such as mobile telephones, personal digital assistants, handheld or laptop computers, and similar devices that have communications capabilities. Such a UA might consist of a UA and its associated removable memory module, such as but not limited to a Universal Integrated Circuit Card (UICC) that includes a Subscriber Identity Module (SIM) application, a Universal Subscriber Identity Module (USIM) application, or a Removable User Identity Module (R-UIM) application. Alternatively, such a UA might consist of the device itself without such a module. In other cases, the term "UA" might refer to devices that have similar capabilities but that are not transportable, such as fixed line telephones, desktop computers, set-top boxes, or network nodes. When a UA is a network node, the network node could act on behalf of another function such as a UA or a fixed line device and simulate or emulate the UA or fixed line device. For example, for some UAs, the IMS SIP client that would typically reside on the device actually resides in the network and relays SIP message information to the device using optimized protocols. In other words, some functions that were traditionally carried out by a UA can be distributed in the form of a remote UA, where the remote UA represents the UA in the network. The term "UA" can also refer to any hardware or software component that can terminate a communication session that could include, but is not limited to, a SIP session. Also, the terms "user agent," "UA," "user equipment," "UE," and "node" might be used synonymously herein.

US6970869 describes A service discovery protocol may allow clients in a distributed computing environment to search for services. Service providers (or a listener agent) may respond to search requests by publishing or providing corresponding service advertisements or URIs to corresponding service advertisements. When a service provider responds to a discovery search request (either directly or through a listener agent), the provider may choose to publish a protected or an un-protected (complete) advertisement. A protected advertisement may include the set of information necessary to obtain a complete advertisement. Publishing a protected advertisement may force the client to obtain a valid credential from an authentication service before receiving the complete un-protected advertisement from the service provider. A complete un-protected advertisement is needed to create a message endpoint for accessing the service. Forcing clients to obtain a valid credential before receiving an advertisement may provide an additional level of security for the service provider. The security credential that may need to be obtained to receive the complete advertisement may also be used to construct a message gate to communicate with the service where the gate embeds the security credential in each message to the service.

US2004111525 provides a mechanism for the dynamic discovery and selection of web service implementations at runtime without explicit client control. With the mechanism of the present invention, service requests are received from clients and a portType or other type identifier of operations that need to be supported by a service implementation is identified. A discovery mechanism is invoked for querying service information sources to identify candidates from these sources that support the portType or operations identified. A list of these candidates is compiled and a selection mechanism is used to select a candidate from the compiled list. The selected candidate is then used to generate a service object used by a client for accessing the actual service implementation.

### Summary

Accordingly the present teaching provides a method, user agent and network element in accordance with the independent claims. Advantageous features are detailed in the dependent claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
Figure 1 is a flow diagram for establishment of a SIP session according to the prior art.
Figure 2 is a diagram of a policy architecture according to an embodiment of the disclosure.
Figure 3 is a diagram of a method for providing policy information to a user agent according to an embodiment of the disclosure.
Figure 4 illustrates a processor and related components suitable for implementing the several embodiments of the present disclosure.

### DETAILED DESCRIPTION

It should be understood at the outset that although illustrative implementations of one or more embodiments of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

The SIP Request for Comments (RFC) 3261 is a signaling protocol for creating, modifying, and terminating multimedia sessions. A central element in SIP is the proxy server. Proxy servers are intermediaries that are responsible for request routing, rendezvous, authentication and authorization, mobility, and other signaling services. However, proxies are divorced from the actual sessions - audio, video, and session-mode messaging - that SIP establishes. Details of the sessions are carried in the payload of SIP messages and are usually described with the Session Description Protocol (SDP) [RFC4566].

Experience has shown that there is a need for SIP intermediaries to impact aspects of a session. Session parameters are typically controlled through the enforcement of session policies. For example, SIP can be used in a wireless network that has limited resources for media traffic. During periods of high activity, the wireless network provider could want to restrict the amount of bandwidth available to each user. With session policies, an intermediary in the wireless network can inform a UA about the bandwidth it has available. This information enables the UA to make an informed decision about the number of streams, the media types, and the codecs it can successfully use in a session. Similarly, a network provider can have a service level agreement with a user that defines the set of media types the user can use. The network can convey the current set of session policies to user agents, enabling them to set up sessions without inadvertently violating any of the network policies.

In another example, a SIP UA is using a network which is connected to the public Internet through a firewall or a network border device. The network provider would like to tell the UA that it needs to send its media streams to a specific IP address and port on the firewall or border device to reach the public Internet. Knowing this policy enables the UA to set up sessions across the firewall or the network border. In contrast to other methods for inserting a media intermediary, the use of session policies does not require the inspection or modification of SIP message bodies.

Domains often have the need to enforce the session policies they have in place. For example, a domain might have a policy that disallows the use of video and can have an enforcement mechanism that drops all packets containing a video encoding. Unfortunately, these enforcement mechanisms usually do not inform the user about the policies they are enforcing. Instead, they silently keep the user from doing anything against them. This can lead to a malfunctioning of devices that is incomprehensible to the user. With session policies, the user knows about the current network policies and can set up policy-compliant sessions or simply connect to a domain with less stringent policies. Thus, session policies provide an important combination of consent coupled with enforcement. That is, the user becomes aware of the policy and needs to act on it, but the provider still retains the right to enforce the policy.

Two types of session policies exist: session-specific policies and session-independent policies. Session-specific policies are policies that are created for a particular session and may be based, for example, on the description of the session. They enable a network intermediary to examine the session description a UA is proposing and to return a policy specifically for that session description. For example, an intermediary could open pinholes in a firewall/network address translation (NAT) for each media stream in the proposed session description. It can then return a policy for the session description that replaces the IP addresses and ports of the UA with the ones opened in the firewall/NAT that are reachable from external sources. Since session-specific policies are tailored to a session, they only apply to the session they are created for. Session-specific policies are created on a session-by-session basis at the time the session is established.

Session-independent policies, on the other hand, are policies that are created independently of a session and generally apply to all SIP sessions set up by a UA. A session-independent policy can, for example, be used to inform UAs about an existing bandwidth limit or media type restrictions. Since these policies are not based on a specific session description, they can be created independently of an attempt to set up a session and only need to be conveyed to the UA when it initializes (e.g., at the time the device is powered on) and when policies are changed.

The mechanisms described below can be used for both session-independent policies and session-specific policies. For session-specific polices (i.e., policies provided in response to a SIP request or SIP response), a PolicyOffer or PolicyAnswer document might be returned to a UA. For session-independent policies (i.e., policies provided to the UA prior to a session), a Session Policy document might be returned.

In addition to media policies, the mechanisms defined herein can be used to inform the UA to use a different IP address in the SDP Offer or Answer, to navigate firewalls or NATs, or to route media via a transcoder or other media relay.

The Third Generation Partnership Project (3GPP) has standardized the IP Multimedia Subsystem (IMS) as a Next Generation SIP/IP based network for multimedia services for mobile and landline networks. The architecture for 3GPP IMS is specified in 3GPP Technical Specification (TS) 23.228. In 3GPP TS 23.228, the functionality of IMS elements is specified, including the Serving Call Session Control Function (S-CSCF) and the Proxy Call Session Control Function (P-CSCF). The S-CSCF acts as both the SIP Registrar and as a SIP Proxy as defined in [RFC 3261]. The P-CSCF also acts as a SIP Proxy. The 3GPP IMS uses SIP for session signaling and, as described above, the IMS network entities (P-CSCF and S-CSCF) may need to impact aspects of a session (such as number of streams, the media types, and the codecs).

3GPP has defined the architecture for Policy and Charging Control (PCC) that performs the necessary Authorization and Accounting functions for UA access to IMS bearer resources. The PCC architecture includes a Policy Server, the PCRF (Policy Control and Charging Rules function), which, based on inputs from various sources, determines which UAs are allowed bearer access based on the attributes and characteristics of the session (such as the number of streams, the media types, and the codecs). The PCRF interfaces to the Subscription Profile Repository (SPR) for subscription-based policies and to the Application Function (AF) for application-specific inputs. When IMS is used with PCC, the AF is a SIP proxy, the P-CSCF, that can influence the PCRF based on the SIP Session Signaling. The PCRF interfaces to the Policy Control Enforcement Function (PCEF) that provides gating and filtering functions to ensure that the policy is enforced. The PCEF is integrated with the Access Network specific gateway (e.g., GGSN, PDG, PDSN, or CMTS). These entities might communicate using the DIAMETER or RADIUS protocol and form part of the Authentication Authorization Accounting (AAA) infrastructure.

Currently, 3GPP has defined in TS 24.229 a session policy policing mechanism for IMS based on the SIP proxies sending a SIP 488 response if the original SIP INVITE request contains media types or codecs that network policies do not allow. As specified in [RFC 3261], the SIP 488 response contains SDP descriptions of the media types and codecs that would be allowed so that the calling UA can retry the request with SDP that would be allowed. However, this approach has the problem that, as the SIP request traverses each domain, every domain may have its own set of policies. It is quite possible in roaming situations that a single SIP request can traverse as many as four different IMS domains and potentially have a SIP 488 response sent back by each domain, resulting in a severely delayed session setup. Also, this mechanism does not work for SIP INVITE requests that do not contain SDP, which is allowed in [RFC 3261], where an initial SIP INVITE without SDP can be sent and the called UA can then send back the SDP offer in the response, with the calling party then returning the SDP answer in the ACK request. A response cannot be rejected with a SIP 488 response since a SIP response can only be sent in response to a request. Therefore, 3GPP IMS has restricted the use of these offerless SIP INVITE requests by allowing them to come only from network servers (that are aware of the policies) and from outside IMS networks where they may happen, in which case, if the session is established with codecs contrary to policies, it is immediately terminated with a BYE message. This situation is not satisfactory.

With the current session policy mechanism defined by 3GPP, potentially each proxy in each domain could have to reject the SIP INVITE request with a SIP 488 response, resulting in a calling UA having to send five SIP INVITE requests (and receive four SIP 488 responses) before the SIP INVITE request reaches the called UA.

The large number of round trip SIP messages that need to be sent under this scenario and the large size of the messages and the policy document can result in an unacceptably inefficient mechanism that can consume a great deal of overhead. Not only is this a waste of signaling bandwidth, this could cause a significant delay in session setup. In addition, the SIP servers might need to contact each one of a plurality of policy servers to obtain policy information. This further delays call setup and can drain the UA's battery.

Additionally, the 3GPP PCC architecture depends on the P-CSCF analyzing the SDP from the SIP signaling to provide input into the PCRF for the authorization of bearer resources for the session. For the called UA, the SDP answer sent in a response is required by the P-CSCF in order to authorize the bearer resources based on the media types and codecs accepted by the called UA. This means that the called UA often needs to send a provisional (1xx) response containing the SDP answer earlier than it would otherwise have sent an SDP answer. Since IMS uses the preconditions framework [RFC 3312], this provisional response needs to be sent reliably. This can require a further SIP PRACK request and 200 OK response to be exchanged as well, which results in a considerably delayed call setup time due to the additional unnecessary SIP messages needing to be exchanged end to end.

The IETF is defining a session policy framework in [draft-sip-session-policy-framework-03] to enable the network to convey the current set of policies to SIP UAs, enabling them to set up sessions without inadvertently violating any of the network policies.

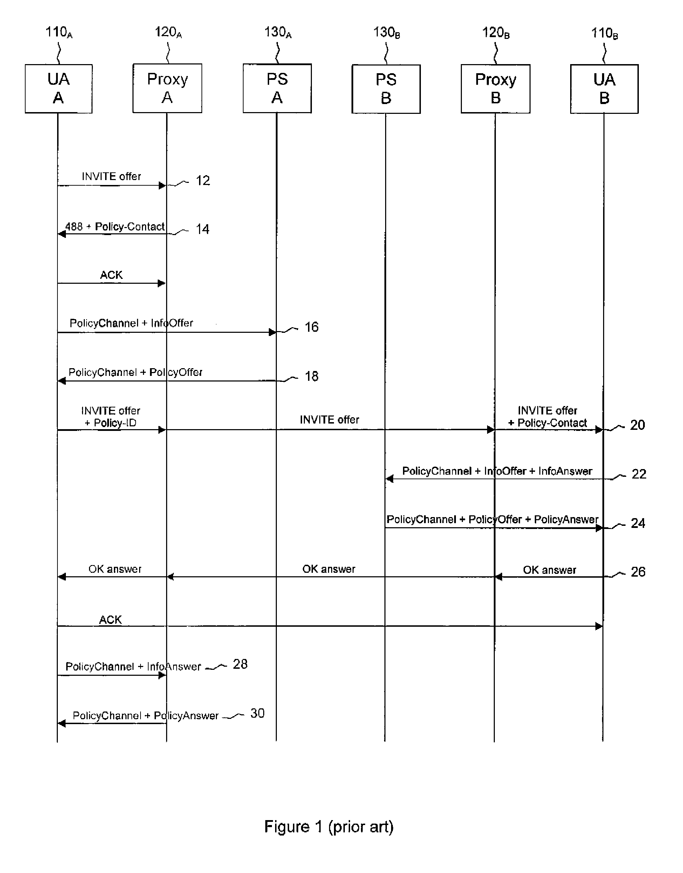

Figure 1 is a flow diagram from [draft-sip-session-policy-framework-03] that illustrates the basic IETF SIP architecture of the session policy framework with SIP session establishment. At event 12, a first UA_{A} 110_{A} sends an INVITE request containing an SDP offer to a first proxy_{A} 120_{A}. At event 14, the first proxy_{A} 120_{A} sends a SIP 488 message including a Policy-Contact header to the first UA_{A} 110_{A}. (As used herein, the term "header" could refer to the header of a SIP message or to a header field such as the Contact header field.) The first UA_{A} 110_{A} then returns an acknowledgement message to the first proxy_{A} 120_{A}. At event 16, the first UA_{A} 110_{A} sends a PolicyChannel message including an InfoOffer to a first policy server_{A} 130_{A}. At event 18, the first policy server_{A} 130_{A} sends a PolicyChannel message including a PolicyOffer to the first UA_{A} 110_{A}.

At event 20, the first UA_{A} 110_{A} sends an INVITE offer message to a second UA_{B} 110_{B} via the first proxy_{A} 120_{A} and a second proxy_{B} 120_{B}. At event 22, the second UA_{B} 110_{B} sends a PolicyChannel message including an InfoOffer and an InfoAnswer to a second policy server_{B} 130_{B}. At event 24, the second policy server_{B} 130_{B} sends a PolicyChannel message including a PolicyOffer and a PolicyAnswer to the second UA_{B} 110_{B}. At event 26, the second UA_{B} 110_{B} sends an OK response containing an SDP answer to the first UA_{A} 110_{A} via the second proxy_{B} 120_{B} and the first proxy_{A} 120_{A}. The first UA_{A} 110_{A} then returns an acknowledgement message to the second UA_{B} 110_{B}. At event 28, the first UA_{A} 110_{A} sends a PolicyChannel message including an InfoAnswer to the first proxy_{A} 120_{A}. At event 30, the first proxy_{A} 120_{A} sends a PolicyChannel message including a PolicyAnswer to the first UA_{A} 110_{A}.

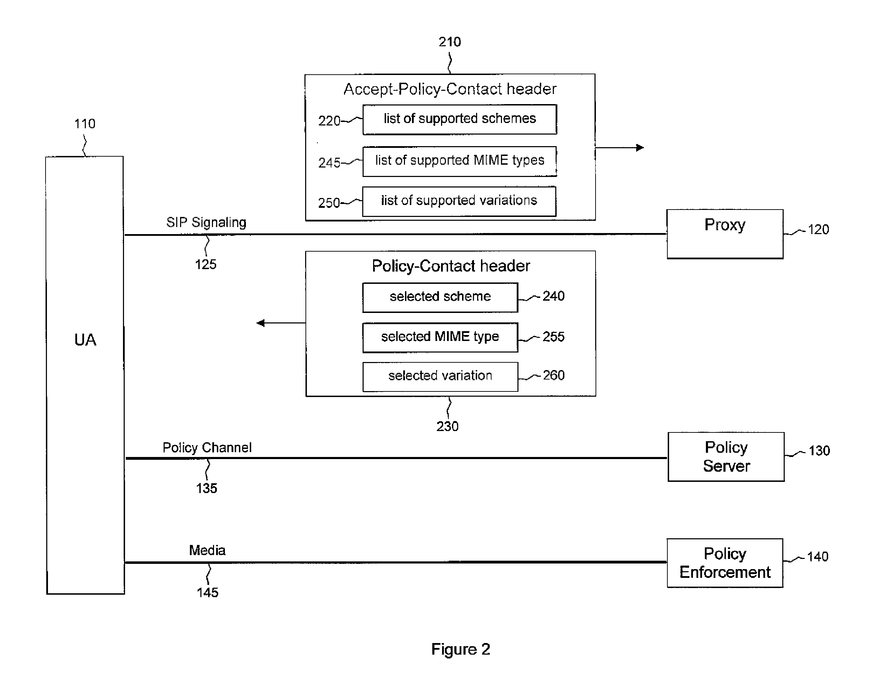

The following entities are typically needed for session-specific policies: a UA, a proxy, a policy server, and possibly a policy enforcement entity. A policy architecture for these entities is illustrated in Figure 2. A UA 110 communicates with a proxy 120 via SIP signaling 125 and communicates with a policy server 130 via a policy channel 135. Media 145 might be exchanged between the UA 110 and a policy enforcement component 140.

The proxy 120 ensures that each UA 110 obtains the Uniform Resource Identifier (URI) of the policy server 130 in its domain and knows where to retrieve policies from. The proxy 120 conveys the policy server URI to the UAs 110 in case they have not yet received it (e.g., in a previous call or through other means such as configuration). The proxy 120 does not deliver the actual policies to the UA 110. Instead, the proxy 120 provides the UA 110 with a URI or other identifier for the policy server 130 from which the UA 110 can retrieve a policy document or other policy information.

The policy server 130 is a separate logical entity that can be physically co-located with the proxy 120. The role of the policy server 130 is to deliver session policies to the UA 110. The policy server 130 receives session information from the UA 110, uses this information to determine the policies that apply to the session, and returns these policies to the UA 110.

The Session Policies framework defines the SIP Policy-Contact header (which can be included by the proxy 120 in the SIP requests and responses) as the mechanism by which the UA 110 receives the URI of a policy server 130 from a proxy 120. That is, the proxy 120 can add the URI of the policy server 130 to the Policy-Contact header. The UA 110 uses this URI to contact the policy server 130 and provide information about the current session to the policy server 130. The UA 110 then receives session policies from the policy server 130 in response. The UA 110 can also receive policy updates from the policy server 130 during the course of a session. The communication exchange between the UA 110 and the policy server 130 is defined as the policy channel 135.

The current Session Policies framework defines a SIP-based mechanism based only upon the SIP Events framework [RFC 3265] and the Event Package defined in [draft-ietf-sipping-policy-package-03] to deliver the session policy to the UA 110 using the policy channel 135 and currently defines only SIP and SIPS URIs as the URIs that can be included by the proxy 120 in the SIP Policy-Contact header. Full details of the Session Policies framework are defined in [draft-sip-session-policy-framework-03].

The SIP Events framework [RFC 3265] is independent of the underlying policy and network architecture and it ensures that all SIP UAs 110 will be able to interact with all policy servers 130. However, for devices with limited power, such as mobile devices with battery, and for limited bandwidth networks, such as GSM (Global System for Mobile Communications), UMTS (Universal Mobile Telecommunications System), CDMA (Code Division Multiple Access), and E-UTRAN (Evolved UMTS Terrestrial Radio Access Network), the SIP Events framework [RFC 3265] is extremely heavy for transferring the session policy to the UAs 110 during session setup. At a minimum, the SIP Events framework requires the following SIP messages to be sent to obtain the session policy: a SUBSCRIBE message, a 200 OK message, a NOTIFY message, and another 200 OK message. Reducing the number of interactions is beneficial as it frees up resources and requires less energy when handling them.

In addition, these messages, especially the SUBSCRIBE message and the NOTIFY message, are large, text-based messages that also include the overhead of the IP and UDP headers. Therefore, the messages could be hundreds of bytes in size. The NOTIFY message might be particularly large since it contains the Extensible Markup Language (XML)-encoded policy document. Reducing the size of messages is beneficial as it frees up resources and requires less energy when handling them.

Thus, in the scenario shown in the session policy flow diagram in Figure 1, twelve SIP messages are required for the three policy channel interactions using SIP Events on the policy channel, in addition to the nine SIP Session Signaling messages needed to establish the session. Thus, the SIP signaling overhead of using the SIP Events framework is greater than the SIP signaling required for the SIP session establishment. Not only is this a waste of signaling bandwidth, but in limited bandwidth networks such as cellular, with signaling channels of only a few thousand kilobytes per second, this could cause a significant delay in the session setup.

Also, the SIP Events framework is stateful, which means that it establishes a SIP dialog. This can place a significant load on the network infrastructure entities. Also, policy servers 130 traditionally have not implemented SIP but have used other protocols such as AAA (RADIUS and DIAMETER) or HTTP (hypertext transfer protocol) for transferring policies.

In an embodiment, the session policy framework mechanisms for the policy channel are made extensible so that additional mechanisms can be defined for obtaining session policies using the policy channel. When the embodiments described herein are implemented, the number and size of round trip messages needed for a UA to request and receive a policy document can be greatly reduced compared to the plurality of SIP messages that were used in the SIP-only scenario described above. More specifically, a URI scheme other than or in addition to a SIP-based or SIPS-based URI scheme can be used on the policy channel. For example, HTTP, HTTPS (hypertext transfer protocol secure), FTP (file transfer protocol), or Uniform Resource Names (URNs) that define other access-specific mechanisms could be used as the URI scheme for transmitting policy-related data. Use of such a URI scheme on the policy channel, rather than a SIP-based or SIPS-based URI scheme, can decrease the size and number of messages needed to provide a policy document or other policy information to the UA. The procedures may differ for originating UAs and target UAs. The case of an originating UA will be considered first.

In an embodiment, the syntax of a SIP header field allows for specification of a plurality of URI schemes to be used for negotiating a channel. As used herein, the term "negotiating a channel" could refer to events related to the selection of a policy channel or to events related to the selection of a communication protocol to be used on a policy channel. When an initiator of a channel negotiation request that supports channels in this manner attempts to exchange information, the initiator of the channel negotiation request can inform a channel server of the channels that it supports. The channel server could then select a scheme that is appropriate for the initiator of the channel negotiation request, include the selected scheme in a response, and send the response to the initiator of the channel negotiation request.

In another embodiment, the syntax of the SIP Policy-Contact header is enhanced to allow the Policy-Contact header to specify one or more URI schemes that can be used for obtaining the session policy document over the policy channel. When a first UA that supports multiple URI schemes in this manner attempts to set up a session, the first UA might inform a second SIP UA, a SIP proxy server, a SIP registrar server, or a SIP Back to Back User Agent of the schemes that it supports. Hereinafter, the term "SIP component" will be used to refer to any such component. The SIP component could then select one or more schemes that are appropriate for the first UA, include the selected scheme or schemes in the Policy-Contact header, and send the Policy-Contact header to the first UA. The second UA might be an endpoint or might be an intermediary network node (e.g., a B2BUA (Back to Back User Agent)).

In order for the SIP component to select a URI scheme and include the URI scheme in the SIP Policy-Contact header, the SIP component needs to first determine what URI schemes are actually supported by the first UA. To provide this information to the SIP component, a new SIP header can be created that allows the first UA to list the URI schemes that the first UA supports for the policy channel. The first UA can then transmit this header to the SIP component when attempting to set up a session. The SIP component could read the list of the URI schemes in this header, select from the list one or more URI schemes appropriate for the policy channel, include the selected URI scheme or schemes in the Policy-Contact header, and send the Policy-Contact header to the first UA.

More specifically, in an embodiment, when a UA sends a SIP request (such as a SIP INVITE) or a SIP response, the UA includes in the SIP message an indication of the supported policy channel URI schemes. In one embodiment, the indication can be in a SIP header such as a new SIP header that is defined for this purpose (e.g., Accept-Policy-Contact header) and that contains the list of policy channel URI schemes supported by the UA. For example, the Accept-Policy-Contact header could be:
Accept-Policy-Contact: originator=sip;sips;http;https;urn:gsma:apn

The "originator" parameter indicates that what follows contains the list of policy channel URI schemes supported by the originator of the SIP message (request or response). In this case, the policy channel URI schemes supported by the UA are sip, sips, http, https, and urn:gsma:apn, but in other embodiments, other policy channel URI schemes could be supported.

A first UA can send a header such as the Accept-Policy-Contact header to a SIP component. The SIP component can select from the policy channel URI schemes listed in the Accept-Policy-Contact header, or a similar header, the most appropriate scheme that is supported by both the first UA and the SIP component and that is to be used by the first UA for the policy channel. The SIP component can include the selected URI in the Policy-Contact header in a SIP message to the first UA. For example, if "urn:gsma:apn" is selected by the SIP component, the Policy-Contact header can be:
Policy-Contact: urn:gsma:apn:pol-serv12345.mnc012.mcc345.gprs

Upon receiving the Policy-Contact header containing the policy URI, the first UA can then use that URI to access the policy server using the mechanism defined for that URI. In this example embodiment, the URI is a URN containing an Access Point Name (APN) as defined in 3GPP TS 23.003 for GPRS:
urn:gsma:apn:pol-serv12345.mnc012.mcc345.gprs

This example embodiment contains as the APN Network Identifier "polserv12345", which identifies the policy server. As described in detail below, the version of the policy document to be delivered can optionally be specified as well. The UA can then use GPRS mechanisms or other protocols over GPRS to establish the policy channel to obtain the policy document. This is just one possible access specific policy URI scheme that could be defined.

An embodiment of this procedure is illustrated in Figure 2, where the UA 110 sends the proxy 120 an Accept-Policy-Contact header 210 that includes a list 220 of supported policy URI schemes. The proxy 120 selects one of the schemes and sends the UA 110 a Policy-Contact header 230 that includes the selected scheme 240.

The procedures described above can be taken by the originator of a SIP request or SIP response. The target UA of a SIP request or SIP response typically cannot directly include a header in a SIP request or response before it transits the proxies that determine the policy URI scheme to be used by the target UA. Therefore, the above procedures may not be appropriate for a target UA.

To address this, in an embodiment, when the target UA performs the SIP Registration procedure, the target UA includes in the SIP Register request a list of policy URI schemes it supports. In the following embodiment, a new Contact header field parameter, "+sip.supported-policy-scheme", is defined to transport the list of supported policy URI schemes to the SIP Registrar. The target UA can include the +sip.supported-policy-scheme Contact header field parameter in the SIP Contact header of the SIP Register request. For example, the Contact header could be:
Contact: <sip: 192.0.2.2>;+sip.supported-policy-scheme= "sip,sips,http,https,urn:gsma:apn"

The SIP registrar then stores the Contact header field parameters associated with the Contact that is bound with the registered Address of Record. When a SIP request arrives at the registrar (or a proxy server that serves the targeted UA), the registrar or proxy obtains the list of supported policy URI schemes associated with the Contact address of the target UA and includes these in a SIP Accept-Policy-Contact header. The registrar or proxy adds the Accept-Policy-Contact header to the SIP request or SIP response along with a target parameter to indicate that what follows contains the list of policy channel URI schemes supported by the target of the SIP message. For example, the Accept-Policy-Contact header could be:
Accept-Policy-Contact: target=sip;sips;http;https;urn:gsma:apn

A proxy server can select from the policy channel URI schemes listed in the Accept-Policy-Contact header the most appropriate scheme that is supported by both the target UA and the policy server that is to be used by the target UA. The proxy server can include that selected URI in the Policy-Contact header in a SIP message to the target UA, similar to the originating case. When the target UA receives the SIP message containing the Policy-Contact header, the target UA can then access the policy server using the policy URI in the Policy-Contact header in a similar way as described for the originating UA.

It should be realized that other embodiments and variations are possible. For example, SIP parameters could be used in place of SIP headers, and the names of the headers or parameters could be changed. The details and structure of the syntax could also be changed.

Another embodiment is to define for each policy URI scheme a new SIP option tag or feature tag. Then, instead of the originating UA using an Accept-Policy-Contact header, the option tags for the supported policy URI schemes could be included in the existing SIP Supported header. Likewise, the target UA can include the option tags for the supported policy URI schemes in the existing sip.extensions media feature tag defined in [RFC 3840] in the Contact header of the SIP register instead of the +sip.su pported-policy-scheme Contact header field parameter. This embodiment does have the issue that option tags can only be alphanumeric characters and so cannot as easily represent URNs which have separator characters. Also, SIP proxy servers do not currently modify the option tags in the Supported header, so the Accept-Policy-Contact header may still be required.

In another embodiment, the originating UA does not use the Accept-Policy-Contact header to indicate its supported policy URI schemes. Instead, the originating UA uses the new Contact header field parameter "+sip.supported-policy-scheme" to transport the list of supported policy URI schemes in the Contact header of the request for the session.

Within a policy channel, a suitable document conveys policy settings. For example, draft-ietf-sipping-media-policy-dataset defines a policy document identified by a URN: "urn:ietf:params:xml:ns:mediadataset" and a MIME type application/media-policy-dataset+xml. Further, draft-ietf-sipping-policy-package also defines an event package to deliver the session policy document using the SIP Subscribe/Notify mechanism per IETF RFC 3265. In the absence of any indications otherwise, it can be assumed that selection of a URN scheme that corresponds with a policy channel also determines the policy document that can be exchanged using that policy channel as 'given' or predetermined.

The above discussion described how the policy URI scheme that is to be used to deliver a policy document might be specified. As mentioned previously, the policy document that is to be delivered might be specified as well. That is, there may different policy documents or variations of policy documents applicable within the policy channel, and the techniques discussed above could be extended to specify which policy document or variation of a policy document is to be provided. The term "representation of policy information" might be used herein to refer to a policy document or a variation or extension of a policy document or in some embodiments may refer to a version of policy document.

More specifically, in an embodiment, the Accept-Policy-Contact header is further extended by adding a parameter containing the Multipurpose Internet Mail Extensions (MIME) types accepted for the policy channel for the specified policy URI schemes. There may be multiple MIME types accepted for the policy channel. A schema version parameter (labeled "sv" in the example below) can also be added to indicate XML schema extensions or enhancements if the MIME type is an XML MIME type. For example, the Accept-Policy-Contact header could be:
Accept-Policy-Contact: originator=sip "application/media-policy-dataset+xml,sv=urn:ietf:params:xml:ns:mediadataset,urn:ietf:params:xml:
   ns:mediadataset:extensionB, urn:ietf:params:xml:ns:mediadataset:extensionZ"; Sips "application/media-policy-dataset+xml,sv=urn:ietf:params:xml:ns:mediadataset";
   http "uri.etsi.org/ngn/params/xml/simservs/xcap";
   https "uri.etsi.org/ngn/params/xml/simservs/xcap";
   urn:gsma:apn "uri.etsi.org/3gpp/policy"

In an embodiment, when a UA sends a SIP request (such as a SIP INVITE) or a SIP response, the UA includes in the SIP message an indication of the supported policy channel URI schemes along with one or more MIME types accepted for the policy channel for the specified policy URI schemes. An optional set of symbols defining the class of acceptable XML documents representing policy documents might also be included. In one embodiment, the indication can be in a SIP header such as a new SIP header that is defined for this purpose (e.g., Accept-Policy-Contact header) and that contains the list of policy channel URI schemes supported by the UA and a parameter containing the MIME types accepted for the policy channel for the specified policy URI schemes.

A schema version parameter can also be added per MIME type to indicate XML schema extensions, enhancements, or variations. The schema version parameter contains the optional set of symbols defining the class of acceptable XML documents representing policy documents. The schema version parameter accepts several symbols (comma- or hyphen-separated). The symbols represent the series of XML schema (e.g., DTD, NGRelax, XML Schema) documents supported/accepted. In the example above, for MIME type "application/media-policy-dataset+xml", the following symbols represent the actual set of XML schema documents to which XML documents can conform in order for the UA to understand them: urn:ietf:params:xml:ns:mediadataset, urn:ietf:params:xml:ns:mediadataset:extensionB,
urn:ietf:params:xml:ns:mediadataset:extensionZ

One might argue that "urn:ietf:params:xml:ns:mediadataset" is already 'given' since it is most likely registered with the Internet Assigned Numbers Authority (IANA) along with the registration of the MIME type (see section 10.1 of [d raft-ietf-sipping-media-policy-dataset-05] and section 10.2 of [draft-ietf-sipping-media-policy-dataset-05]). Here, "urn:ietf:params:xml:ns:mediadataset" is included for completeness, and "urn:ietf:params:xml:ns:mediadataset:extensionB" and "urn:ietf:params:xml:ns:mediadataset:extensionZ" are the symbols representing particular example extensions. These symbols are not necessarily formatted as namespaces, but can be simple digits corresponding to XML schema documents or even strings. However, namespaces are the more convenient embodiment in this case.

A UA can send a header such as the Accept-Policy-Contact header to a proxy server. The proxy server can select from the policy channel URI schemes and associated documents along with variations listed in the Accept-Policy-Contact header the most appropriate schemes, MIME types, or variations within a MIME type that are supported. The proxy server determines this based upon the supported policy URIs and MIME types (plus optional sets of symbols per MIME type defining the class of acceptable XML documents representing policy documents) for the policy document that are mutually understood by both the UA and the policy server and that are to be used by the UA for the policy channel. The proxy server then includes that selected URI, MIME type, or associated document version in the Policy-Contact header in a SIP message to the UA. Upon receiving the Policy-Contact header containing the policy URI and associated document version, the UA can then use that URI to access the policy server using the mechanism defined for that URI and obtain the policy information in a document according to the MIME type including any variations and extensions that it supports.

An embodiment of this procedure is illustrated in Figure 2, where the UA 110 sends the proxy 120 an Accept-Policy-Contact header 210 that includes the list 220 of supported policy URI schemes, a list 245 of supported MIME types per policy URI scheme, and a list 250 of supported variations/extensions per MIME types. The proxy 120 selects one or more of the schemes, one or more of the MIME types, and/or one or more of the variations/extensions and sends the UA 110 a Policy-Contact header 230 that includes the selected schemes 240, the selected MIME types 255, and/or the selected variations/extensions 260.

In another embodiment, the UA 110 sends the proxy 120 both an Accept-Policy-Contact header that includes the list of supported policy URI schemes and an Accept header that includes either a list of supported MIME types per policy URI scheme or a list of supported variations/extensions per MIME types. The proxy 120 selects one or more of the schemes, one or more of the MIME types, or one or more of the variations/extensions and sends the UA 110 a Policy-Contact header that includes the selected schemes and an Accept header with the selected MIME types or the selected variations/extensions. The UA 110 could then correlate the items in the Accept header with the items in the Policy-Contact header. It should be noted that an Accept header field may not be present in all SIP responses.

It should be realized that other embodiments and variations are possible. For example, SIP parameters could be used in place of SIP headers, and the names of the headers or parameters could be changed. The details and structure of the syntax could also be changed.

The procedures described above can be taken by the originator of a SIP request or SIP response. In an embodiment, the UA that is the target for the request or the response indicates the MIME types or variations/extensions per MIME types of the policy document that it accepts by including in the SIP Register request that it sends during the SIP Registration procedure the list of policy URI schemes it supports along with the MIME types accepted for the policy channel for the specified policy URI schemes. Optionally, a schema version parameter can also be added to indicate XML schema extensions, enhancements, or variations. In the following embodiment, a new Contact header field parameter, "+sip.supported-policy-scheme", is defined to transport the list of supported policy URI schemes. A parameter containing the MIME types accepted for the policy channel for the specified policy URI schemes and a schema version parameter to indicate XML schema extensions or enhancements or variations can also be transported to the SIP Registrar. The UA can include the +sip.supported-policy-scheme Contact header field parameter in the SIP Contact header of the SIP Register request. For example, the Contact header could be:
Contact: <sip:192.0.2.2>;+sip.supported-policy-scheme= "sip*application%2Fmedia-policy-dataset+xml%2Csv%3Durn%3Aietf%3Aparamsxml%3Ans%3Amediadataset,urn%3Aietf%3 Aparams%3Axml%3Ans%3Amediadataset%3AextensionB,urn%3Aietf%3Aparams%3
Axml%3Ans%3Amediadataset%3AextensionZ,sips*application%2Fmedia-policy-dataset+xml%2Csv%3Durn%3Aietf%3Aparamsxml%3Ans%3Amediadataset, http*uri.etsi.org%2Fngn%2Fparams%2Fxml%2Fsimservs%2Fxcap,
https*uri.etsi.org%2Fngn%2Fparams%2Fxml%2Fsimservs%2Fxcap,
urn%3Agsma%3Aapn*uri.etsi.org%2F3gpp%2Fpolicy"

Certain characters have been escaped in order to conform to the syntax of RFC 3840. Also, it should be realized that other embodiments and variations are possible. For example, SIP parameters could be used in place of SIP headers, and the names of the headers or parameters could be changed. The details and structure of the syntax could also be changed.

The SIP registrar then stores the Contact header field parameters associated with the Contact that is bound with the registered Address of Record. When a SIP request arrives at the registrar (or a proxy server that serves the targeted UA), the registrar or proxy obtains the list of supported policy URI schemes along with the MIME types (plus the optional sets of symbols per MIME type defining the class of acceptable XML documents representing policy documents) that is associated with the Contact address of the target UA. The registrar or proxy includes these in a SIP Accept-Policy-Contact header, which it adds to the SIP request or SIP Response along with a target parameter to indicate that what follows contains the list of policy channel URI schemes and MIME types plus the set of symbols defining the class of acceptable XML documents representing policy documents supported by the target of the SIP message. For example, the Accept-Policy-Contact header could be:
Accept-Policy-Contact: target=sip "application/media-policy-dataset+xml,sv=urn:ietf:params:xml:ns:mediadataset,urn:ietf:params:xml:
   ns:mediadataset:extensionB,urn:ietf:params:xml:ns:mediadataset:extensionZ"; Sips "application/media-policy-dataset+xml,svwurn:ietf:params:xml:ns:mediadataset";
   http "uri.etsi.org/ngn/params/xml/simservs/xcap";
   https "uri.etsi.org/ngn/params/xml/simservs/xcap";
   urn:gsma:apn "uri.etsi.org/3gpp/policy"

A proxy server can select from the policy channel URI schemes and associated document versions listed in the Accept-Policy-Contact header the most appropriate scheme and associated document version that are supported. The proxy server determines this based upon the supported policy URIs and MIME types (plus the optional sets of symbols per MIME type defining the class of acceptable XML documents representing policy documents) for the policy document that can be generated or (semantically) understood by both the UA and the policy server that is to be used by the UA for the policy channel. The proxy server includes the selected URI and associated document version in the Policy-Contact header in a SIP message, similar to the originating case. Upon receiving the message containing the Policy-Contact header, the target UA can access the policy server using the policy URI in the Policy-Contact header in a similar way as described for the originating UA. The target UA can also obtain the policy document in the MIME type that it supports.

It should be realized that other embodiments and variations are possible. For example, SIP parameters could be used in place of SIP headers, and the names of the headers or parameters could be changed. The details and structure of the syntax could also be changed.

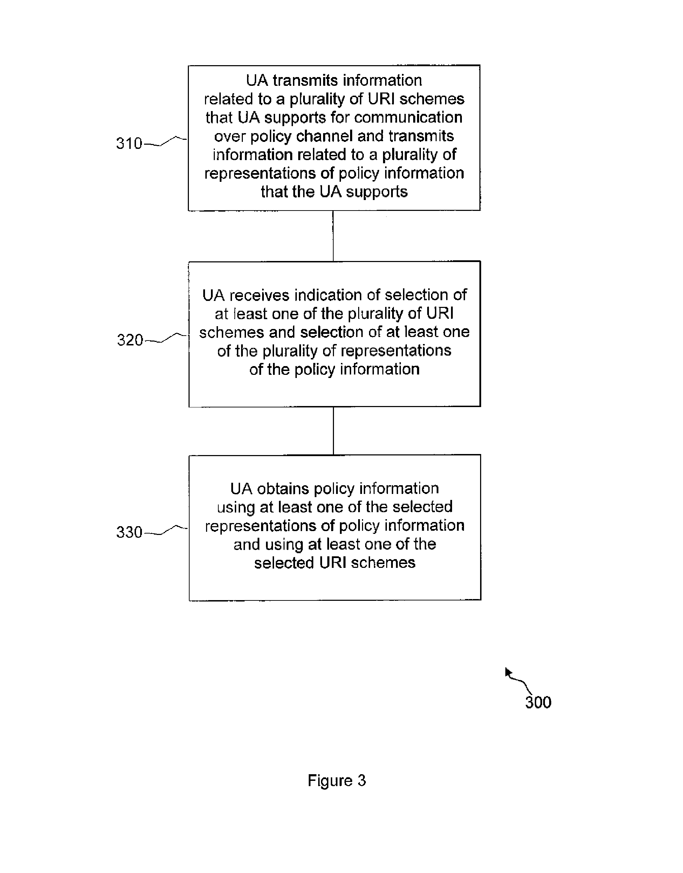

Figure 3 illustrates a method 300 for providing policy information to a user agent. At block 310, the user agent transmits information related to a plurality of URI schemes that the user agent supports for communication over the policy channel and transmits information related to a plurality of representations of the policy information that the user agent supports. At block 320, the user agent receives an indication of a selection of at least one of the plurality of URI schemes and a selection of at least one of the plurality of representations of the policy information. At block 330, the user agent obtains policy information using at least one of the selected representations of the policy information and using at least one of the selected URI schemes.

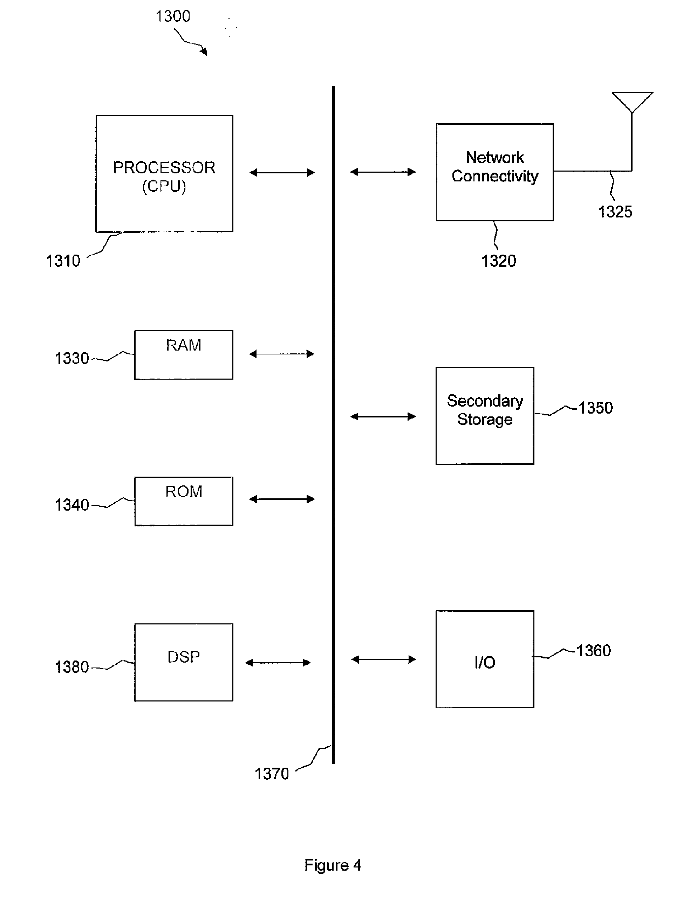

The UA 110 and other components described above might include a processing component that is capable of executing instructions related to the actions described above. Figure 4 illustrates an example of a system 1300 that includes a processing component 1310 suitable for implementing one or more embodiments disclosed herein. In addition to the processor 1310 (which may be referred to as a central processor unit or CPU), the system 1300 might include network connectivity devices 1320, random access memory (RAM) 1330, read only memory (ROM) 1340, secondary storage 1350, and input/output (I/O) devices 1360. These components might communicate with one another via a bus 1370. In some cases, some of these components may not be present or may be combined in various combinations with one another or with other components not shown. These components might be located in a single physical entity or in more than one physical entity. Any actions described herein as being taken by the processor 1310 might be taken by the processor 1310 alone or by the processor 1310 in conjunction with one or more components shown or not shown in the drawing, such as a digital signal processor (DSP) 1380. Although the DSP 1380 is shown as a separate component, the DSP 1380 might be incorporated into the processor 1310.

The processor 1310 executes instructions, codes, computer programs, or scripts that it might access from the network connectivity devices 1320, RAM 1330, ROM 1340, or secondary storage 1350 (which might include various disk-based systems such as hard disk, floppy disk, or optical disk). While only one CPU 1310 is shown, multiple processors may be present. Thus, while instructions may be discussed as being executed by a processor, the instructions may be executed simultaneously, serially, or otherwise by one or multiple processors. The processor 1310 may be implemented as one or more CPU chips.

The network connectivity devices 1320 may take the form of modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, global system for mobile communications (GSM) radio transceiver devices, worldwide interoperability for microwave access (WiMAX) devices, digital subscriber line (xDSL) devices, data over cable service interface specification (DOCSIS) modems, and/or other well-known devices for connecting to networks. These network connectivity devices 1320 may enable the processor 1310 to communicate with the Internet or one or more telecommunications networks or other networks from which the processor 1310 might receive information or to which the processor 1310 might output information.

The network connectivity devices 1320 might also include one or more transceiver components 1325 capable of transmitting and/or receiving data wirelessly in the form of electromagnetic waves, such as radio frequency signals or microwave frequency signals. Alternatively, the data may propagate in or on the surface of electrical conductors, in coaxial cables, in waveguides, in optical media such as optical fiber, or in other media. The transceiver component 1325 might include separate receiving and transmitting units or a single transceiver. Information transmitted or received by the transceiver component 1325 may include data that has been processed by the processor 1310 or instructions that are to be executed by processor 1310. Such information may be received from and outputted to a network in the form, for example, of a computer data baseband signal or signal embodied in a carrier wave. The data may be ordered according to different sequences as may be desirable for either processing or generating the data or transmitting or receiving the data. The baseband signal, the signal embedded in the carrier wave, or other types of signals currently used or hereafter developed may be referred to as the transmission medium and may be generated according to several methods well known to one skilled in the art.

The RAM 1330 might be used to store volatile data and perhaps to store instructions that are executed by the processor 1310. The ROM 1340 is a non-volatile memory device that typically has a smaller memory capacity than the memory capacity of the secondary storage 1350. ROM 1340 might be used to store instructions and perhaps data that are read during execution of the instructions. Access to both RAM 1330 and ROM 1340 is typically faster than to secondary storage 1350. The secondary storage 1350 is typically comprised of one or more disk drives or tape drives and might be used for non-volatile storage of data or as an over-flow data storage device if RAM 1330 is not large enough to hold all working data. Secondary storage 1350 may be used to store programs that are loaded into RAM 1330 when such programs are selected for execution.

The I/O devices 1360 may include liquid crystal displays (LCDs), touch screen displays, keyboards, keypads, switches, dials, mice, track balls, voice recognizers, card readers, paper tape readers, printers, video monitors, or other well-known input devices. Also, the transceiver 1325 might be considered to be a component of the I/O devices 1360 instead of or in addition to being a component of the network connectivity devices 1320.

Incorporated herein by reference as if reproduced in their entirety are the following IETF internet drafts:
http://www.ietf.org/internet-drafts/draft-ietf-sip-session-policy-framework.txt
http://www.ietf.org/internet-drafts/draft-ietf-sipping-media-policy-dataset.txt
http:llwww. ietf.orglinternet-draftsldraft-ietf-sipping-config-framework.txt
http://www.ietf.org/internet-drafts/draft-ietf-sipping-policy-package.txt

Also incorporated herein by reference as if reproduced in their entirety are the following SIP RFCs: RFC 3261, RFC 3265, RFC 3312, RFC 3840, and RFC 4566.

Also incorporated herein by reference as if reproduced in their entirety are the following 3GPP TSs: TS 23.003, TS 23.228, and TS 24.229.

In an embodiment, a method for providing policy information to a user agent is provided. The method comprises the user agent transmitting information related to a plurality of uniform resource identifier (URI) schemes that the user agent supports for communication over a policy channel and transmitting information related to a plurality of representations of the policy information that the user agent supports. The method further includes the user agent receiving a notification of a selection of at least one of the plurality of URI schemes and a selection of at least one of the plurality of representations of the policy information. The method further includes the user agent using at least one of the selected representations of the policy information and using at least one of the selected URI schemes to obtain the policy information.

In an alternative embodiment, a user agent is provided. The user agent comprises a processor configured to transmit information related to a plurality of uniform resource identifier (URI) schemes that the user agent supports for communication over a policy channel and to transmit information related to a plurality of representations of policy information that the user agent supports.

In an alternative embodiment, a network component is provided. The network component comprises a processor configured to receive from a user agent information related to a plurality of uniform resource identifier (URI) schemes that the user agent supports for communication over a policy channel and to receive from the user agent information related to a plurality of representations of policy information that the user agent supports.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the scope disclosed herein.

## Claims

1. A method comprising:
a user agent transmitting a session initiation protocol (SIP) message to a SIP component in a network, wherein the SIP message includes information related to a plurality of uniform resource identifier (URI) schemes that the user agent supports for communication over a policy channel and information related to a plurality of representations of policy information that the user agent supports;
the user agent receiving an indication from the SIP component of a selection of at least one of the plurality of URI schemes and a selection of at least one of the plurality of representations of the policy information; and
the user agent obtaining policy information using at least one of the selected representations of the policy information and using at least one of the selected URI schemes,
wherein the policy information enables the user agent to carry out or set up a session in compliance with one or more of the network's policies.

2. The method of Claim 1 wherein the plurality of URI schemes comprises at least one of:
hypertext transfer protocol (http);
hypertext transfer protocol secure (https);
file transfer protocol (ftp);
session initiation protocol (SIP);
session initiation protocol secure (SIPS); and
Uniform Resource Names (URNs).

3. The method of Claim 1, wherein obtaining policy information using at least one of the selected representations of the policy information and using at least one of the selected URI schemes comprises obtaining policy information using XML Configuration Access Protocol (XCAP).

4. The method of Claim 1, wherein the user agent transmits the information related to the plurality of URI schemes and the information related to the plurality of representations of the policy information:
to the session initiation protocol (SIP) component in a first SIP header; or
to a session initiation protocol (SIP) registrar server as a parameter in a SIP Contact header in a SIP Register request; or
as a parameter in a session initiation protocol (SIP) Contact header in a request for a SIP session

5. The method of Claim 4, wherein the first SIP header is a SIP Accept-Policy-Contact header.

6. The method of Claim 4, wherein user agent receives from the SIP component the indication of the selection of at least one of the plurality of URI schemes and the selection of at least one of the plurality of representations of the policy information to the user agent in a second SIP header, the second SIP header optionally being a SIP Policy-Contact header.

7. The method of Claim 1, wherein the information related to the plurality of representations of the policy information is specified as a Multipurpose Internet Mail Extensions (MIME) type.

8. The method of Claim 1, wherein the communication over the policy channel comprises returning at least one of:
a Policy Offer document;
a Policy Answer document;
a Session Policy document; and
an Extensible Markup Language (XML)-encoded policy document.

9. A user agent comprising:
a processor configured to carry out the method steps of any preceding claim.

10. A network component comprising:
a processor configured to receive a session initiation protocol (SIP) message from a user agent in a network, wherein the SIP message includes information related to a plurality of uniform resource identifier (URI) schemes that the user agent supports for communication over a policy channel and information related to a plurality of representations of policy information that the user agent supports,
the processor configured to transmit to the user agent an indication of a selection of at least one of the plurality of URI schemes and a selection of at least one of the plurality of representations of the policy information; and
wherein the communication over the policy channel comprises returning policy information that enables the user agent to carry out or set up a session in compliance with one or more of the network's policies using at least one of the selected representations of the policy information and using at least one of the selected URI schemes.

11. The network component of Claim 10, wherein:
the network component receives the information in a first session initiation protocol (SIP) header and/or wherein the network component transmits the indication of the selection of at least one of the plurality of URI schemes and at least one of the representations of policy information to the user agent in a second SIP header, or
wherein the network component receives the information related to the plurality of URI schemes and the information related to the plurality of representations of the policy information as a parameter in a session initiation protocol (SIP) Contact header in a SIP Register request; or
wherein the network component receives the information related to the plurality of URI schemes and the information related to the plurality of representations of the policy information as a parameter in a session initiation protocol (SIP) Contact header in a request for a SIP session.

12. The network component of Claim 10, wherein the network component is one of:
a session initiation protocol (SIP) registrar server;
a SIP Proxy server;
a SIP User Agent; and
a SIP Back to Back User Agent.

13. The network component of claim 11 wherein the first session initiation protocol (SIP) header is a SIP Accept-Policy-Contact header.

14. The network component of claim 10 wherein the information related to the plurality of representations of the policy information is specified as a Multipurpose Internet Mail Extensions (MIME) type.

15. The network component of claim 10 wherein the communication over the policy channel comprises returning at least one of:
a Policy Offer document;
a Policy Answer document;
a Session Policy document; and
an Extensible Markup Language (XML)-encoded policy document.

## Patentansprüche

1. Verfahren mit:
einem Benutzeragenten, der eine Sitzungseinleitungsprotokoll-, "Session Initiation Protocol"-, (SIP)- Nachricht an eine SIP-Komponente in einem Netz sendet, wobei die SIP-Nachricht Information, die sich auf eine Vielzahl von Uniform-Resource-Identifier- (URI)- Schemata bezieht, die der Benutzeragent unterstützt, für eine Kommunikation über einen Richtlinienkanal, und Information aufweist, die sich auf eine Vielzahl von Repräsentationen von Richtlinieninformation bezieht, die der Benutzeragent unterstützt,
wobei der Benutzeragent eine Angabe von der SIP-Komponente über eine Auswahl mindestens eines der Vielzahl von URI-Schemata und eine Auswahl mindestens einer der Vielzahl von Repräsentationen der Richtlinieninformation, und
wobei der Benutzeragent Richtlinieninformation unter Verwendung mindestens einer der ausgewählten Repräsentationen der Richtlinieninformation und unter Verwendung mindestens eines der ausgewählten URI-Schemata erhält,
wobei die Richtlinieninformation den Benutzeragenten befähigt, eine Sitzung unter Einhaltung einer oder mehrerer der Netzrichtlinien auszuführen oder aufzusetzen.

2. Verfahren nach Anspruch 1, wobei die Vielzahl von URI-Schemata mindestens eines aus Folgendem aufweist:
Hypertext-Übertragungsprotokoll, "Hypertext Transfer Protocol", (http),
sicherem Hypertext-Übertragungsprotokoll, "Hypertext Transfer Protocol Secure", (https),
Dateiübertragungsprotokoll, "File Transfer Protocol", (ftp),
Sitzungseinleitungsprotokoll, "Session Initiation Protocol", (SIP),
sicherem Sitzungseinleitungsprotokoll, "Session Initiation Protocol Secure", (SIPS) und
einheitlichen Ressourcennamen, "Uniform Resource Names", (URNs).

3. Verfahren nach Anspruch 1, wobei das Erhalten von Richtlinieninformation unter Verwendung mindestens einer der ausgewählten Repräsentationen der Richtlinieninformation und unter Verwendung mindestens eines der ausgewählten URI-Schemata ein Erhalten von Richtlinieninformation unter Verwendung von XML-Konfigurations-Zugriffs-Protokoll, "XML Configuration Access Protocol", (XCAP) aufweist.

4. Verfahren nach Anspruch 1, wobei der Benutzeragent die Information, die sich auf die Vielzahl von URI-Schemata bezieht, und die Information, die sich auf die Vielzahl von Repräsentationen der Richtlinieninformation bezieht,
an die SIP-Komponente in einem ersten SIP-Kopf oder
an einen SIP- Registrator- bzw. -Registrar-Server als ein Parameter in einem SIP-Kontakt-Kopf in einer SIP-Registrier-Anfrage oder
als ein Parameter in einem SIP-Kontakt-Kopf in einer Anfrage nach einer SIP-Sitzung
sendet.

5. Verfahren nach Anspruch 4, wobei der erste SIP-Kopf ein SIP-Akzeptier-Richtlinien-Kontakt-Kopf, "SIP Accept-Policy-Contact header" ist.

6. Verfahren nach Anspruch 4, wobei der Benutzeragent von der SIP-Komponente die Angabe über die Auswahl mindestens eines der Vielzahl von URI-Schemata und die Auswahl mindestens einer der Vielzahl von Repräsentationen der Richtlinieninformation an den Benutzeragenten in einem zweiten SIP-Kopf empfängt, wobei der zweite SIP-Kopf optional ein SIP-Richtlinien-Kontakt-Kopf ist.

7. Verfahren nach Anspruch 1, wobei die Information, die sich auf die Vielzahl von Repräsentationen der Richtlinieninformation bezieht, als ein Mehrzweck-Internet-Post-Erweiterungs-, "Multipurpose Internet Mail Extensions"-, (MIME)- Typ spezifiziert ist.

8. Verfahren nach Anspruch 1, wobei die Kommunikation über den Richtlinienkanal ein Zurückgeben mindestens eines aus Folgendem aufweist:
einem Richtlinien-Angebot-Dokument,
einem Richtlinien-Antwort-Dokument,
einem Sitzungs-Richtlinien-Dokument und
einem nach erweiterbarer Auszeichnungssprache, "Extensible Markup Language", (XML) codierten Richtliniendokument.

9. Benutzeragent mit:
einem Prozessor, der dazu konfiguriert ist, die Verfahrensschritte nach einem der vorhergehenden Ansprüche auszuführen.

10. Netzkomponente mit:
einem Prozessor, der dazu konfiguriert ist, eine Sitzungseinleitungsprotokoll-, "Session Initiation Protocol"-, (SIP)-Nachricht von einem Benutzeragenten in einem Netz zu empfangen, wobei die SIP-Nachricht Information aufweist, die sich auf eine Vielzahl von Uniform-Resource-Identifier-(URI)- Schemata bezieht, die der Benutzeragent unterstützt, für eine Kommunikation über einen Richtlinienkanal und Information, die sich auf eine Vielzahl von Repräsentationen von Richtlinieninformation bezieht, die der Benutzeragent unterstützt,
wobei der Prozessor dazu konfiguriert ist, an den Benutzeragenten eine Angabe über eine Auswahl mindestens eines der Vielzahl von URI-Schemata und eine Auswahl mindestens einer der Vielzahl von Repräsentationen der Richtlinieninformation zu senden, und
wobei die Kommunikation über den Richtlinienkanal ein Zurückgeben von Richtlinieninformation aufweist, die den Benutzeragenten befähigt, eine Sitzung unter Einhaltung einer oder mehrerer der Netzrichtlinien unter Verwendung mindestens einer der ausgewählten Repräsentationen der Richtlinieninformation und unter Verwendung mindestens eines der ausgewählten URI-Schemata auszuführen oder aufzusetzen.

11. Netzkomponente nach Anspruch 10, wobei:
die Netzkomponente die Information in einem ersten SIP-Kopf empfängt und/oder wobei die Netzkomponente die Angabe über die Auswahl mindestens eines der Vielzahl von URI-Schemata und mindestens einer der Repräsentationen von Richtlinieninformation an den Benutzeragenten in einem zweiten SIP-Kopf sendet, oder
wobei die Netzkomponente die Information, die sich auf die Vielzahl von URI-Schemata bezieht, und die Information, die sich auf die Vielzahl der Repräsentationen der Richtlinieninformation bezieht, als ein Parameter in einem SIP-Kontakt-Kopf in einer SIP-Registrier-Anfrage empfängt, oder
wobei die Netzkomponente die Information, die sich auf die Vielzahl von URI-Schemata bezieht, und die Information, die sich auf die Vielzahl von Repräsentationen der Richtlinieninformation bezieht, als ein Parameter in einem SIP-Kontakt-Kopf in einer Anfrage für eine SIP-Sitzung empfängt.

12. Netzkomponente nach Anspruch 10, wobei die Netzkomponente eines aus Folgendem ist:
einem SIP-Registrator- bzw. -Registrar-Server,
einem SIP-Proxyserver,
einem SIP-Benutzeragenten und
einem SIP-Back-to-Back-Benutzeragenten.

13. Netzkomponente nach Anspruch 11, wobei der erste SIP-Kopf ein SIP-Akzeptier-Richtlinien-Kontakt-Kopf, "SIP Accept-Policy-Contact header" ist.

14. Netzkomponente nach Anspruch 10, wobei die Information, die sich auf die Vielzahl von Repräsentationen der Richtlinieninformation bezieht, als ein Mehrzweck-Internet-Post-Erweiterungs-, "Multipurpose Internet Mail Extensions"-, (MIME)- Typ spezifiziert ist.

15. Netzkomponente nach Anspruch 10, wobei die Kommunikation über den Richtlinienkanal ein Zurückgeben mindestens eines aus Folgendem aufweist:
einem Richtlinien-Angebot-Dokument,
einem Richtlinien-Antwort-Dokument,
einem Sitzungs-Richtlinien-Dokument und
einem nach erweiterbarer Kennzeichnungssprache, "Extensible Markup Language" (XML) codierten Richtliniendokument.

## Revendications

1. Procédé comprenant les étapes consistant à :
émettre par un agent utilisateur un message du protocole de lancement de session (SIP pour « *Session Initiation Protocol* ») vers un composant SIP sur un réseau, dans lequel le message SIP comprend des informations intéressant une pluralité de mécanismes d'identificateur uniforme de ressource (URI pour « *Uniform Resource Identifier* ») que l'agent utilisateur supporte pour la communication sur un canal de politique et des informations intéressant une pluralité de représentations d'informations de politique que l'agent utilisateur supporte ;
recevoir par l'agent utilisateur une indication provenant du composant SIP sur une sélection d'au moins un mécanisme parmi la pluralité de mécanismes d'URI et sur une sélection d'au moins une représentation parmi la pluralité de représentations d'informations de politique ; et
obtenir par l'agent utilisateur des informations de politique à l'aide d'au moins une des représentations sélectionnées d'informations de politique et à l'aide d'au moins un des mécanismes d'URI sélectionnés ;
dans lequel les informations de politique permettent à l'agent utilisateur d'exécuter ou d'établir une session conforme à une ou plusieurs des politiques du réseau.

2. Procédé selon la revendication 1, dans lequel la pluralité de mécanismes d'URI comprend au moins l'un des suivantes :
protocole de transfert d'hypertexte (http) ;
protocole de transfert d'hypertexte sécurisé (https) ;
protocole de transfert de fichiers (ftp) ;
protocole de lancement de session (SIP) ;
protocole de lancement de session sécurisé (SIPS) ; et
noms uniformes de ressources (URN).

3. Procédé selon la revendication 1, dans lequel l'étape d'obtention d'informations de politique à l'aide d'au moins une des représentations sélectionnées d'informations de politique et à l'aide d'au moins un des mécanismes d'URI sélectionnés comprend l'étape consistant à obtenir des informations de politique à l'aide du protocole d'accès à la configuration en XML (XCAP).

4. Procédé selon la revendication 1, dans lequel l'agent utilisateur émet les informations intéressant la pluralité de mécanismes d'URI et les informations intéressant la pluralité de représentations d'informations de politique :
vers le composant SIP dans un premier en-tête SIP ; ou
vers le serveur de registre SIP sous la forme d'un paramètre dans un en-tête de contact SIP dans une demande de registre SIP ; ou
sous la forme d'un paramètre dans un en-tête de contact SIP dans une demande de session SIP.

5. Procédé selon la revendication 4, dans lequel le premier en-tête SIP est un en-tête de contact d'acceptation de politique SIP.

6. Procédé selon la revendication 4, dans lequel l'agent utilisateur reçoit du composant SIP l'indication de la sélection d'au moins un mécanisme parmi la pluralité de mécanismes d'URI et de la sélection d'au moins une représentation parmi la pluralité de représentations d'informations de politique adressée à l'agent utilisateur dans un second en-tête SIP, le second en-tête étant optionnellement un en-tête de contact de politique SIP.

7. Procédé selon la revendication 1, dans lequel les informations intéressant la pluralité de représentations d'informations de politique sont spécifiées comme un type d'extension de courriel internet à usages multiples (MIME pour « *Multipurpose Internet Mail Extension* »).

8. Procédé selon la revendication 1, dans lequel l'étape de communication sur le canal de politique comprend l'étape consistant à renvoyer au moins un des éléments suivants :
un document d'offre de politique ;
un document de réponse de politique ;
un document de politique de session ; et
un document de politique codé en XML.

9. Agent utilisateur comprenant .
un processeur configuré pour exécuter les étapes du procédé selon l'une quelconque des revendications précédentes.

10. Composant de réseau comprenant :
un processeur configuré pour recevoir un message de protocole de lancement de session (SIP pour « *Session Initiation Protocol* ») d'un agent utilisateur sur un réseau, dans lequel le message SIP comprend des informations intéressant une pluralité de mécanismes d'identificateur uniforme de ressource (URI pour « *Uniform Resource Identifier* ») que l'agent utilisateur supporte pour la communication sur un canal de politique et des informations intéressant une pluralité de représentations d'informations de politique que l'agent utilisateur supporte ;
le processeur étant configuré pour émettre vers l'agent utilisateur une indication sur une sélection d'au moins un mécanisme parmi la pluralité de mécanismes d'URI et sur une sélection d'au moins une représentation parmi la pluralité de représentations d'informations de politique ; et
dans lequel la communication sur le canal de politique comprend le fait de renvoyer des informations de politique qui permettent à l'agent utilisateur d'exécuter ou d'établir une session conforme à une ou plusieurs des politiques du réseau à l'aide d'au moins une des représentations sélectionnées d'informations de politique et à l'aide d'au moins un des mécanismes d'URI sélectionnés.

11. Composant de réseau selon la revendication 10, dans lequel :
le composant de réseau reçoit les informations dans un premier en-tête SIP et/ou dans lequel le composant de réseau émet l'indication de la sélection d'au moins un mécanisme parmi la pluralité de mécanismes d'URI et d'au moins une des représentations d'informations de politique vers l'agent utilisateur dans un second en-tête SIP ; ou
dans lequel le composant de réseau reçoit les informations intéressant la pluralité de mécanismes d'URI et les informations intéressant la pluralité de représentations d'informations de politique sous la forme d'un paramètre dans un en-tête de contact SIP d'une demande de registre SIP ; ou
dans lequel le composant de réseau reçoit les informations intéressant la pluralité de mécanismes d'URI et les informations intéressant la pluralité de représentations d'informations de politique sous la forme d'un paramètre d'un en-tête de contact SIP dans une demande de session SIP.

12. Composant de réseau selon la revendication 10, dans lequel le composant de réseau est l'un des suivants :
un serveur de registre SIP ;
un serveur mandataire SIP ;
un agent utilisateur SIP ; et
un agent utilisateur SIP de bout en bout.

13. Composant de réseau selon la revendication 11, dans lequel le premier en-tête SIP est un en-tête de contact d'acceptation de politique SIP.

14. Composant de réseau selon la revendication 10, dans lequel les informations intéressant la pluralité de représentations d'informations de politique sont spécifiées comme un type d'extension de courriel internet à usages multiples (MIME pour « *Multipurpose Internet Mail Extension* »).

15. Composant de réseau selon la revendication 10, dans lequel la communication sur le canal de politique comprend le renvoi d'au moins un des éléments suivants :
un document d'offre de politique ;
un document de réponse de politique ;
un document de politique de session ; et
un document de politique codé en XML.
